# EUROPEAN PATENT SPECIFICATION

(11) **EP 3 515 748 B1**
(45) Date of publication and mention of the grant of the patent: **19.01.2022**
(21) Application number: 16770924.5
(22) Date of filing: 23.09.2016
(51) Int. Cl.: B60L 5/38, B60L 5/18, B60L 5/04

(54) **A CURRENT COLLECTOR DEVICE FOR A VEHICLE**
STROMABNEHMER FÜR EIN FAHRZEUG
COLLECTEUR DE COURANT POUR UN VÉHICULE

(43) Date of publication of application: 31.07.2019
(73) Proprietor: Volvo Truck Corporation, 405 08 Göteborg (SE)
(72) Inventor: ÖHMAN, Mikaela, 414 81 Göteborg (SE); SEBESTYEN, Richard, 423 59 Torslanda (SE)
(74) Representative: Kransell & Wennborg KB
(86) International application number: PCT/EP2016/072721
(87) International publication number: WO 2018/054487

(56) References cited:
- EP-A2- 0 222 128
- EP-A2- 0 278 606
- CN-A- 102 180 097
- GB-A- 1 103 379
- US-A1- 2011 266 108
- Anonymous: "Isolator (Elektrotechnik) - Wikipedia", , 8 September 2016 (2016-09-08), XP055373521, Retrieved from the Internet: URL:https://de.wikipedia.org/w/index.php?t itle=Isolator_(Elektrotechnik)&oldid=15776 8525 [retrieved on 2017-05-16]

## Description

### TECHNICAL FIELD

The invention relates to a current collector device for a vehicle using an electric road system (ERS) and a vehicle operated using this current collector device.

The invention can be applied in vehicles, such as trucks, buses and construction equipment. Although the invention will be described with respect to a commercial vehicle, the invention is not restricted to this particular vehicle, but may also be used in heavy-duty vehicles such as working machines in the form of articulated haulers, or a vehicle such as an automobile.

### BACKGROUND

Vehicles travelling on an electric road system (ERS) are provided with a current collector device arranged to transmit electric power from a current conductor located in the road surface to the vehicle for driving the vehicle or for charging an electrical storage means, such as a high voltage battery onboard the vehicle. The current conductor is a charging surface that can comprise a pair of parallel tracks extending along the road, which tracks can supply direct current (DC) to the vehicle via the current collector arrangement.

Current collector devices usually comprise a retractable arm with an attached pick-up unit for deploying into an optimal position for charging, for example by means of an actuator. Actuators used for this purpose are quite different form actuators used in pantographs for overhead wires. Current collector devices for ERS vehicles must perform a controlled movement during deployment into contact with the current conductor while the vehicle is being driven. The current collector device must also be able to hold the pick-up unit in contact, or at least sufficient proximity during inductive charging, with the current conductor during power transmission to avoid arcing.

A further issue is that the voltage and current used in an ERS is very large, and electrical security and galvanic isolation is therefore paramount. Hence, the current collector device, typically being arranged beneath or at the side of the vehicle, being exposed to dirt, waste, water, snow, ice etc., while in operation, is one of the key components which must be robust and able to withstand and electrically isolate the components of the system.

GB 1,103,379 A discloses a current collector having a collector show in an insulating carrier mounted on a rocker arm assembly comprising two rocker arms which are constructed as insulators and pivot on an axle. Further, each arm has insulation rings to increase the length of the creep path.

According to its Abstract, EP 0,222,128 A2 discloses a current-collecting device for rail mounted vehicles that consists of a potential separation from the roof by means of insulators, a base frame with lifting drive and current conducting means, a lower pantograph element and upper pantograph element with control rod and cross-struts.

### SUMMARY

It is an object of the present invention to improve the current state of the art, to at least partly alleviate the above problems, and to provide an improved current collector device. The invention aims to provide an improved current collector device that can provide an improved electrical separation, or reduce the possibility for creep currents in the current collector device. The invention is defined by the features of independent claim 1.

According to the invention, these and other objectives are at least partly met by a current collector device for mounting on a vehicle to transmit electric power between a current conductor located in the surface of a road and the vehicle, wherein the current collector device comprises:
- a base for connecting the current collector device to the vehicle;
- an elongated current collector arm that is in operable connection with the base;
- a current collector pick-up head attached to the elongated current collector arm distally from the base; and
wherein the current collector device further comprises at least one vane arranged on the elongated current collector arm, the at least one vane being configured to increase the surface area of the elongated current collector arm.

Galvanic isolation is typically achieved through mechanical non-conductive isolation between high voltage components and the vehicle chassis structure to which the base of a current collector device is attached. However, current creep is a problem that is difficult to address using mechanical isolation since the current can creep along isolating surfaces if they are polluted. The surface resistance of a material increases with the area of the material and as the resistance increases less current will creep across the material. For example, when a vehicle is charging with 690 Volt and 200 Ampere the creep current distance, due to the area, is much longer than the length of the current collector device. In fact, the creep current distance approaches the maximum legal length of a heavy duty truck in Sweden. Thus, it is impossible to achieve this area-dependent surface resistance by lengthening the elongated current collector arm.

A solution to the above noted problem of current creep is to make the surface of the elongated current collector arm ridged thus increasing the surface area of the isolating material. However, this only solves the problem of current creep temporarily in an exterior automotive environment since the system is exposed to dirt, salt spray and other contaminants that would fill up the ridges and thus eliminate the larger area, in other words the current will creep along the top surface of the accumulated dirt.

The present invention is based on the realization that the risk for a creep current is reduced by at least one vane arranged on the elongated arm, the at least one vane being configured to increase the area along the elongated current collector arm from the current collector pick-up head to the base. Further the at least one vane will last longer in the harsh environment underneath a vehicle before the surface of the vane, in particular the side facing away from the direction of locomotion of the vehicle, becomes contaminated.

The expression "vane" should be understood as a structural feature extending radially from the longitudinal axis of the elongated current collector arm. The vane may extend around the entire circumference of the elongated current collector arm. Alternatively, the vane may extend only from a portion of the circumference of the elongated current collector arm.

The elongated current collector arm and the current collector pick-up head are displaceable. Stated differently, a first end of the elongated current collector arm is attached to the base, and the second end, opposite to the first end, of the elongated current collector arm is free. The current collector pick up head is attached to the elongated current collector arm at the second end, or towards the second end. For example, the current collector pick up head may be attached anywhere between the middle of the elongated current collector head and the second end.

In the subsequent text the wording "electric road system" will be described by the abbreviation ERS. An ERS can encompass a conductive system or an inductive system. Conductive systems require direct contact between a conductor comprising two parallel rails and a corresponding collector in order to transfer DC power or AC power. Inductive systems uses electro-magnetic transmission coils embedded in the road surface and reception coils in the vehicle which are electrically resonant, so that they convert the magnetic flux above the road into electrical energy for use in the vehicle, wherein the energy can be used to charge batteries or drive electric motors in the vehicle.

In the text, the wording "current collector device" is used as a collective term for a device that is suitable for transferring electrical power from a source of electrical energy in or on a road surface. A current collector device of this type comprises a current collector, also referred to as a pick-up or a similar device. The current collector is arranged to be placed in contact with a current conductor, or in the case of inductive charging a correct placement above the tracks. The current collector is typically attached to the vehicle via a controllable assembly that allows the current collector to be at least vertically and optionally also transversely displaced relative to the vehicle. The displacement can be achieved, for instance, by a collector arm that can be pivoted vertically about a horizontal pivot joint towards the road surface and transversely in an arc about a vertical pivot joint, or by a holder displaced vertically along a first guide and transversely about a second guide mounted transversely to the vehicle. Consequently, when it is stated that the current collector is displaced to track a current conductor, this intended to mean that the arrangement is displaced to allow the current collector component of the current collector arrangement to be placed at an optimal position relative current conductor. The term "current conductor" used in this context comprises two parallel rails or similar which are contacted by a pick-up unit comprising a pair of corresponding current conducting contact elements. Alternatively, the current conductor is approached by a pick-up unit which comprises the electronic components needed to receive energy inductively.

The at least one vane is slanted towards the current collector pick-up head. Stated differently, the at least one vane forms a cone with the opening facing away from the main direction of locomotion of the vehicle, e.g. a rear facing cone. By having a slanted vane, there is a reduced risk that contaminants reach and stick to the surface of the vane. In an alternative embodiment the cone shaped vane may be rectangular, square, or have any other shape, as viewed in a cross-section perpendicular to the longitudinal axis of the elongated current collector arm. For example, a rectangular or square vane would form a geometric pyramid-shape.

The vane is also asymmetrical around the elongated current collector arm such that there is a larger radial distance towards the road than towards the vehicle. Such a vane may act as balancing weight for the current collector device.

In at least one exemplary embodiment, the current collector device comprises at least two vanes. Alternatively, the current collector device may comprise at least three vanes.

Alternatively, the current collector device may comprise at least five vanes. By providing a plurality of vanes, the surface along the elongated current collector arm that the creep current needs to overcome becomes larger. Furthermore, the vanes may be sized and oriented in such a way that salt and dirt and other conductive pollution cannot fill up the grooves created between the vanes. Thereby, the risk for a creep current is even further reduced.

In at least one exemplary embodiment, the vanes are separated by at least 1 cm. Stated differently, the surface of the vanes are separated by at least 1 cm such that the air gap created reduces the likelihood of a spark between the vanes. Further, a small distance, e.g. 1 cm, hinders contaminants from entering the groove formed between the vanes. However, the vanes may in principle be separated by any suitable distance, such as 1 cm to 100 cm.

In at least one exemplary embodiment, the slanting angle of the vane or vanes from a longitudinal axis of the elongated current collector arm is between 10 degrees and 30 degrees. Alternatively, the slanting angle of the vane or vanes from a longitudinal axis of the elongated current collector arm is between 30 degrees and 60 degrees, or between 60 degrees and 80 degrees, or between 80 degrees and 90 degrees. The slanting angle, understood as the opening angle of the cone formed by the vane, or each vane of the plurality of vanes. A low angle may provide a reduced aerodynamic drag, whereas a higher angle may provide a vane which is easier to manufacture and/or attach to the elongated current collector arm. As mentioned above, the cone shape should be construed as possible to achieve also from a rectangular or square vane, i.e. forming a geometric pyramid-shape.

In at least one exemplary embodiment, the elongated current collector arm is arranged to be controllable for vertical and transverse displacement relative to the longitudinal axis of the vehicle, and the current collector device further comprises at least one actuator arranged to effect a vertical or transverse displacement of the current collector pick-up head.

In at least one exemplary embodiment, the vane(s) are aerodynamically shaped. In other words, the shape of the vane(s) is chosen to reduce the drag coefficient created by the vane. Thus, the vane(s) may be shaped as a spherically blunted cone, a bi-conic shape, a tangent ogive cone, a spherically blunted tangent ogive, a secant ogive shape, an elliptical cone, a parabolic cone. The specific shape and parameters of such a vane of course depend on the size and the number of vanes to be used.

The present invention also relates to a vehicle comprising a current collector device as described above. Although the invention will be described with respect to a commercial vehicle, such as a truck or a bus, the invention is not restricted to this particular vehicle, but may also be used in a heavy-duty vehicle or in construction equipment, such as a working machine in the form of an articulated hauler, or a vehicle such as an automobile.

An elongated current collector arm for a current collector device for mounting on a vehicle to transmit electric power between a current conductor located in the surface of a road and the vehicle can be provided, which elongated current collector arm comprises - at least one vane arranged on the elongated current collector arm, the at least one vane being configured to increase the surface area of the elongated current collector arm.

Effects and features of the collector arm are largely analogous to those described above in connection with the current collector device according to the invention. In particular, an elongated current collector arm may be used as a replacement for elongated current collector arms in use today, or as a replacement part if a vane or the elongated current collector arm is damaged, e.g. by a collision with debris on the road, or needs to be replaced due to wear and tear. For the sake of brevity, the exemplary embodiments outlined in the above for the current collector device are not repeated for the collector arm, the skilled addressee realizes that these may be used to full advantage also with the collector arm.

In at least one exemplary embodiment, the elongated current collector arm may be solid. Alternatively, the elongated current collector arm may be hollow. Further, the cross-sectional shape, i.e. as viewed in a cross-section perpendicular to the longitudinal axis of the elongated current collector arm, of the elongated current collector arm may be square, rectangular, circular, oval, polygonal, or any other shape.

Further features of, and advantages with, the present invention will become apparent when studying the appended claims and the following description. The skilled addressee realize that different features of the present invention may be combined to create embodiments other than those described in the following, without departing from the scope of the present invention.

### BRIEF DESCRIPTION OF THE DRAWINGS

In the following text, the invention will be described in detail with reference to the attached drawings. These schematic drawings are used for illustration purposes only and do not in any way limit the scope of the invention. In the drawings:
- Figure 1: shows a schematic vehicle comprising a current collector device travelling on an electric road system;
- Figure 2: shows a schematic front view of a current collector device;
- Figure 3: shows a schematic front view of an alternative current collector device;
- Figure 4: shows a schematic isometric view of a current collector device according to an example not forming part of the invention;
- Figure 5: shows a schematic isometric view of a current collector device according to an example not forming part of the invention;
- Figure 6: shows a schematic isometric view of a current collector device according to an example not forming part of the invention;
- Figure 7: shows a schematic isometric view of a current collector device according to an example not forming part of the invention;
- Figure 8: shows a schematic isometric view of a current collector device according to an embodiment of the invention; and
- Figure 9: shows a schematic isometric view of a current collector device according to an example not forming part of the invention.

### DETAILED DESCRIPTION OF EXAMPLE EMBODIMENTS OF THE INVENTION

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled addressee. Like reference characters refer to like elements throughout.

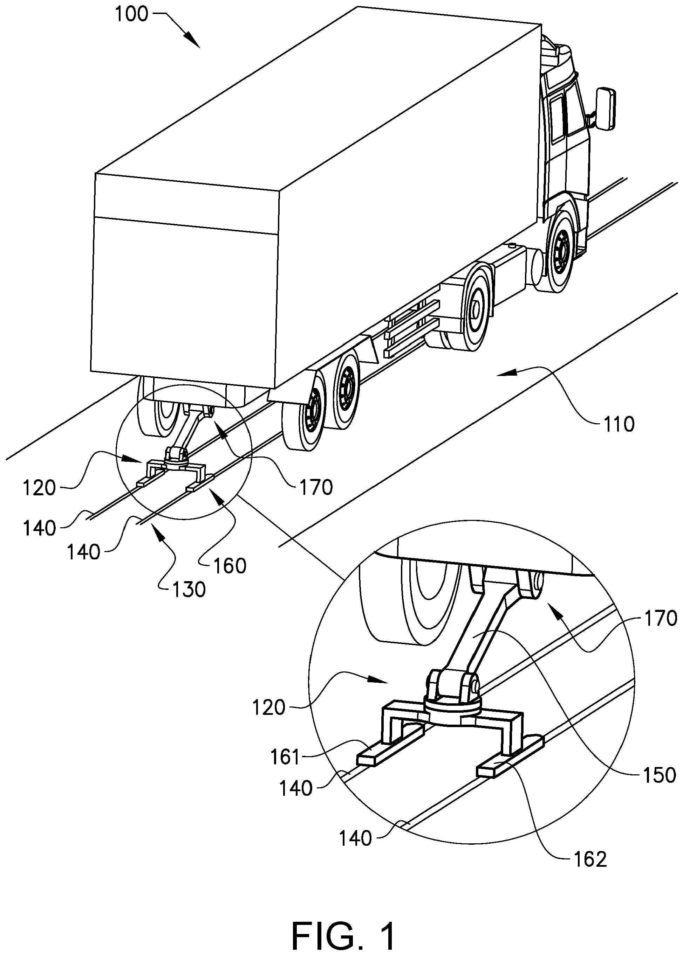

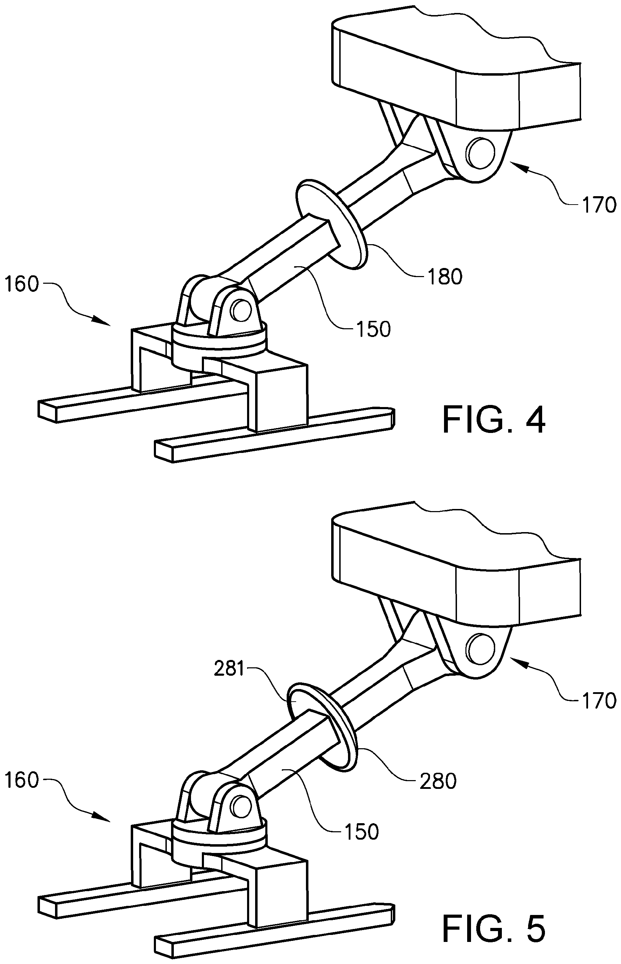

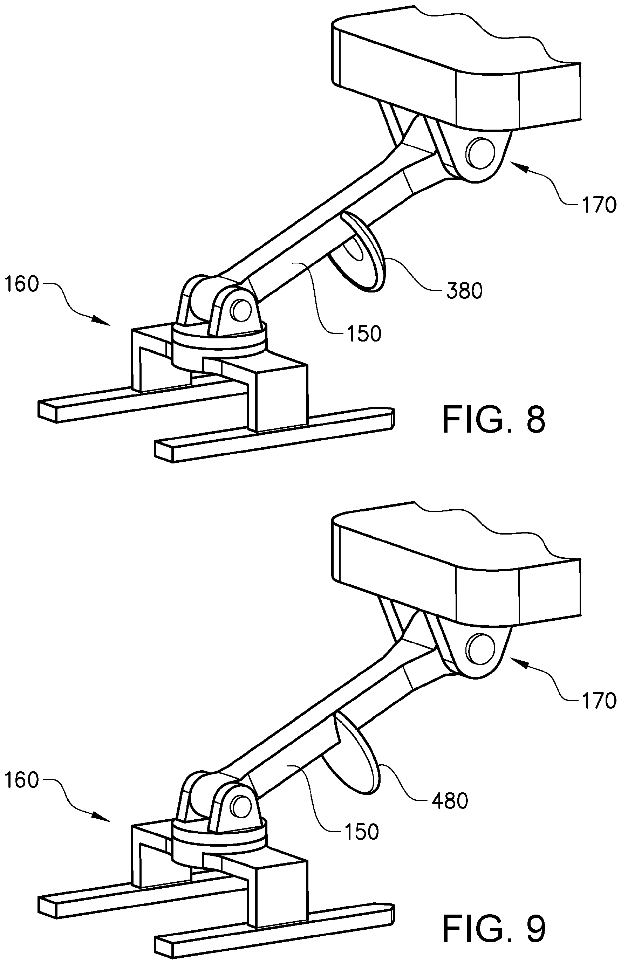

Generally, an embodiment of a current collector device will now be described which aims at reducing the risk of a creep current reaching the chassis structure of a vehicle. First, the general teachings of current collector devices will be explained with reference to figures 1, 2 and 3. Thereafter, embodiments of the present invention will be elucidated with reference to figure 8, while the figures 4- 7 and figure 9 are examples of current collectors not forming part of the invention.

Figure 1 shows a schematic electric road system (ERS) where a vehicle 100 is travelling on a road 110 provided with a current conductor 130 for supplying electric current to the vehicle 100. The vehicle 100 is provided with a conductive current collector device 120, which can be lowered into contact with the current conductor 130 comprising parallel current conducting rails 140 located in the surface of the road 110. The vehicle can be an electric vehicle or a hybrid electric vehicle.

The current collector device 120 comprises a base 170 connecting and attaching the current collector device 120 to the chassis structure of the vehicle 100, an elongated current collector arm 150 arranged to be displaced between a retracted, inactive first position and a deployed, operative second position. In use, the current collector arm 150 and a pick-up unit 160 are lowered into contact with the current conductor 130 using suitable actuators (not shown). The actuator(s) may be arranged in the base 170 of the current collector device 120. The pick-up unit 160 has a pair of contact elements 161, 162. Figure 1 shows the current collector arm 150 in its operative position. Suitable actuators are provided for moving the current collector arm 150 at least in the vertical direction of the vehicle 100. Note that the current collector pick-up head 160 is attached to the elongated current collector arm 150 distally from the base 170. In other words, the current collector pick-up head 160 and the base 170 are arranged at opposite ends of the elongated current collector arm 150.

It may be noted that suitable electrical power cables are typically used to transfer an electrical current from the pick-up unit 160 and the pair of contact elements 161, 162 to electrical contact point of the vehicle. The electrical power cables are omitted in all the drawings for the sake of brevity. However, the skilled addressee realizes that electrical power cables may be led on the outside of the elongated current collector arm, or inside the elongated current collector arm, or in any other way such that an electrical connection for the transfer of electrical current from the pick-up unit 160 and the pair of contact elements 161, 162 is provided.

In this context, the current collector device will be described as comprising a displaceable current collector arm for the pick-up unit, which arm can be displaced vertically either in a straight line or in an arcuate path relative to a pivot with a horizontal axis on the vehicle. The positioning means for such an arm can also comprise actuator means for displacing the arm in the transverse direction of the vehicle, either in a transverse straight line or in an arcuate path relative to a pivot with a vertical axis on the vehicle. Alternatively, the transverse positioning means can comprise suitable control means connected to an electronically controllable steering system in the vehicle, wherein lateral positioning of the vehicle relative to the electrical conductor can be performed using a pair of steerable wheels. Positioning can further be performed using a combination of the above means, for instance if the vehicle must be displaced in the lateral direction to bring the current conductor within the transverse range of the displaceable arm carrying the current collector. The design of the current collector device is described in further detail below.

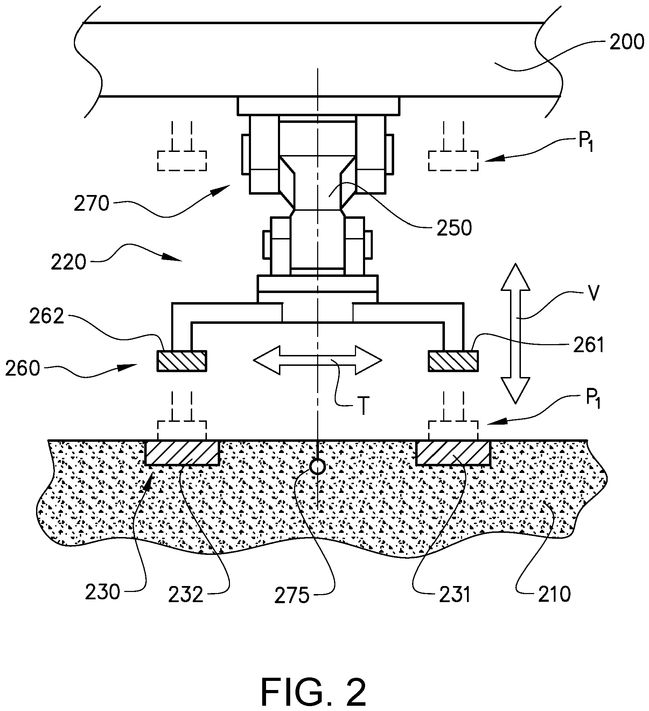

Figure 2 shows a schematic front view of a current collector device 220. The current collector arrangement 220 is mounted on a schematically indicated vehicle 200 located over a schematic section of a road 210. A current conductor 230 comprising a first and a second power rail 231, 232 for supplying DC current is located in the surface of the road 210. The current collector arrangement 220 comprises a current collector arm 250 and a pick-up unit 260 with a pair of contact elements 261, 262 for collecting current from the respective first and second power rails 231, 232. The current collector arm 250 is attached to a vertical positioning means (not shown) for displacing the current collector arm 250 from a retracted first position P1 adjacent the vehicle 200 to an active second position P2 in contact with the current conductor 230. The vertical displacement is indicated by the arrow V. The lowering of the current collector arm 250 into the active second position is performed when its detected that the first and second contact elements 261, 262 are vertically aligned with their respective first and second power rails 231, 232. Alternatively, a movement towards the second active position may be started when a current conductor is detected and then be steered towards an optimal horizontal position. The current collector arm 250 is attached to the vehicle 200 via a horizontal positioning means 270 for displacing the current collector arm 250 in a transverse direction.

In Figure 2, the current collector arm 250 is shown in an intermediate position during displacement towards the second position P2. Prior to lowering the current collector arm 250 into the second position P2 it is necessary to locate and track the current conductor 230. According to the example in Figure 2, locating and tracking the current conductor 230 can be performed by using one or more vertical antennas (not shown) used for detecting the position of a signal cable 275 located between or adjacent the current conductor 230. However, the invention is not limited to this method of locating the current conductor.

In the example shown in Figure 2, the current collector arm 250 and the vertical positioning means are attached to a transverse positioning means 270. The vertical positioning means is arranged to displace the current collector arm 250 and the pick-up unit 260 in the vertical direction of the vehicle 200 as indicated by the arrow V. The horizontal positioning means 270 is arranged to displace the current collector arm 250 and the pick-up unit 260 in the transverse direction of the vehicle 200 as indicated by the arrow T. The transverse positioning means 270 is controlled to displace the current collector arm 250 in the transverse direction of the vehicle 200, initially to locate and subsequently to track the current conductor 230. Tracking is performed to maintain the first and second contact elements 261, 262 in vertical alignment with their respective first and second power rails 231, 232.

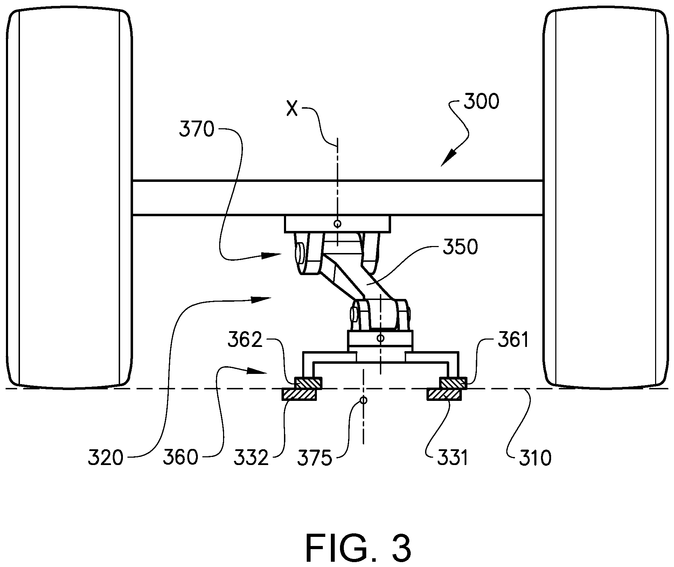

Figure 3 shows a schematic front view of an alternative current collector device 320. The current collector device 320 is mounted on a vehicle 300 located over a section of a road 310. A current conductor 330 comprising a first and a second power rail 331, 332 for supplying DC current is located in the surface of the road 310. The current collector arrangement 320 comprises a current collector arm 350 and a pick-up unit 360 with a pair of contact elements 361, 362 for collecting current from the respective first and second power rails 331, 332. The current collector arm 350 is attached to a vertical positioning means (not shown) for displacing the current collector arm 350 from a retracted first position adjacent the vehicle 300 to an active second position (indicated in the figure) in contact with the current conductor 330. The lowering of the current collector arm 350 into the active, second position is performed when its detected that the first and second contact elements 361, 362 are vertically aligned with their respective first and second power rails 331, 332. Alternatively, a movement towards the second active position may be started when a current conductor is detected and then be steered towards an optimal horizontal position. The current collector arm 250 is attached to the vehicle 300 via a pivoting means 370 for displacing the current collector arm 250 about a vertical axis X. During this displacement, the pick-up unit 360 is moved along an arcuate path relative to the vertical axis X on the vehicle 300.

In reference to the above, and in general with regard to current collector devices; the current conductor is preferably, but not necessarily located in a predetermined transverse position in the longitudinal direction of the road surface. The vehicle is provided with means (not shown) for detecting and/or locating the position of the current conductor relative to the vehicle and/or suitable road markers on or along the road. The current collector device comprises a displaceable current collector arm that is arranged to be controllable for vertical and transverse displacement relative to a longitudinal axis of the vehicle, either via linear movement or arcuate movement. The longitudinal axis of the vehicle extends in the main direction of forward movement of the vehicle. A vertical downwards displacement is performed in order to place a pick-up unit comprising contact elements mounted on a free end of the current collector arm into an optimal charging position, in order to effect transmission of current. A vertical upwards displacement is performed in order to retract the current collector arm, when the current transmission has been interrupted. The current collector arrangement may comprise controllable actuator(s), mounted in the base, arranged to effect the vertical displacement the current collector arm and an electronic control unit (not shown) for controlling at least power transmission in and displacement of the current collector arm. The control unit is arranged to detect when the vehicle enters or leaves an ERS road and to initiate the power transmission after a completed deployment of the current collector arm and to interrupt the power transmission prior to retraction of the current collector arm.

Hence, in operation, it is first determined that the vehicle has entered an ERS road and that the current collector arm should be moved from the retracted position into the deployed position in contact with a current conductor. A signal is transmitted to the ECU which will in turn transmit signals to the actuator(s) causing the current collector arm to be deployed downwards. When the current collector arm reaches its end position in contact with a current conductor, the pressure applied by the actuator(s) will cause a downward force ensuring a sufficient contact force with the conductor.

Subsequently, it can be determined that the vehicle is about to leave the ERS road and that the current collector arm should be moved from the deployed position into the retracted position. Alternatively, a retraction can also be initiated if an obstacle is detected on the conductor, requiring retraction of the control arm or evasive action of the vehicle. A signal is transmitted to the ECU which in turn transmits signals to the actuator(s) causing the current collector arm to be retracted upwards. When the current collector arm reaches its retracted position adjacent the vehicle, the ECU transmits signals to halt the operation of the actuator(s).

Figure 4 shows an example of a current collector device 120, for the sake of brevity the current collector device 120 is for all intents and purposes similar in function with regard to activation and displacement as the current collector devices described above in conjunction with figures 1, 2 and 3. The current collector device 120 comprises a base 170, an elongated current collector arm 150, and a current collector pick-up head 160. The base 170 is attachable to a vehicle. The elongated current collector arm 150 extends from the base 170 to the current collector pick-up head 160 attached at the free end. Stated differently, the elongated current collector arm 150 is attached at a first end to the base 170. At the second end of the elongated current collector arm 150, opposite to the first end, the current collector pick-up head 160 is attached. The second free end of the elongated current collector arm is free to be displaced as described above in conjunction with figures 1, 2 and 3. Hence, the current collector pick-up head 160 is attached to the elongated current collector arm 150 distally from the base 170.

The current collector device 120 further comprises a vane 180, which increases the surface area between the current collector pick-up head 160 and the base 170, thereby reducing the likelihood that a creep current reaches the base from the current collector pick-up head 160. The vane 180 is formed as a disc centred on the elongated current collector arm 150. Stated differently, the elongated current collector arm has a longitudinal axis, and the vane 180 extends radially from the longitudinal axis of the current collector arm 150. The vane 180 may extend radially to a suitable distance, for example, the radii of the vane may be in the range of 5 cm to 50 cm. In Figure 4 the vane 180 is placed approximately halfway between the two ends of the elongated current collector arm 150. However, it is in principle possible to arrange the vane 180 anywhere along the elongated current collector arm 150.

The vane 180 may be a separate from the elongated current collector arm 150 and attached via any known means such as glue, welding, nut and bolt arrangements, crimp fit or the like. Alternatively, the vane 180 may be formed integrally with the elongated current collector arm 150. Hence, the vane 180 may be made of the same material as the elongated current collector arm 150, or from another material. The vane 180 may be made of a lightweight and strong material, such as stainless steel, aluminium, titanium, plastic or a metallic alloy. Likewise, the elongated current collector arm 150 may be made of a lightweight and strong material, such as stainless steel, aluminium, titanium, plastic or a metallic alloy. The vane 180 and/or the elongated current collector arm 150 may comprise a coating (not illustrated) to protect the vane and/or elongated current collector arm 150 from the harsh conditions below a vehicle. The coating is preferably electrically isolating. The coating may be hydrophobic and or oleophobic to facilitate the removal of contaminants on the surface of the vane 180 and/or elongated current collector arm 150.

Figure 5 shows an alternative example of a current collected device, where the vane 280 slants towards the current collector pick-up head 160. In other words, the vane 280 is shaped as a cone with the opening towards the current collector pick-up head 160. As the current collector pick-up head 160 is arranged on the free end of the of the current collector arm 150, the cone shaped vane 280 will have an opening facing away from the main direction of locomotion of a vehicle onto which the current collector device is mounted. The inner surface of the vane 280, defined as the surface facing rearwards, can thus be further protected from contaminants such as water, dirt, ice, and snow.

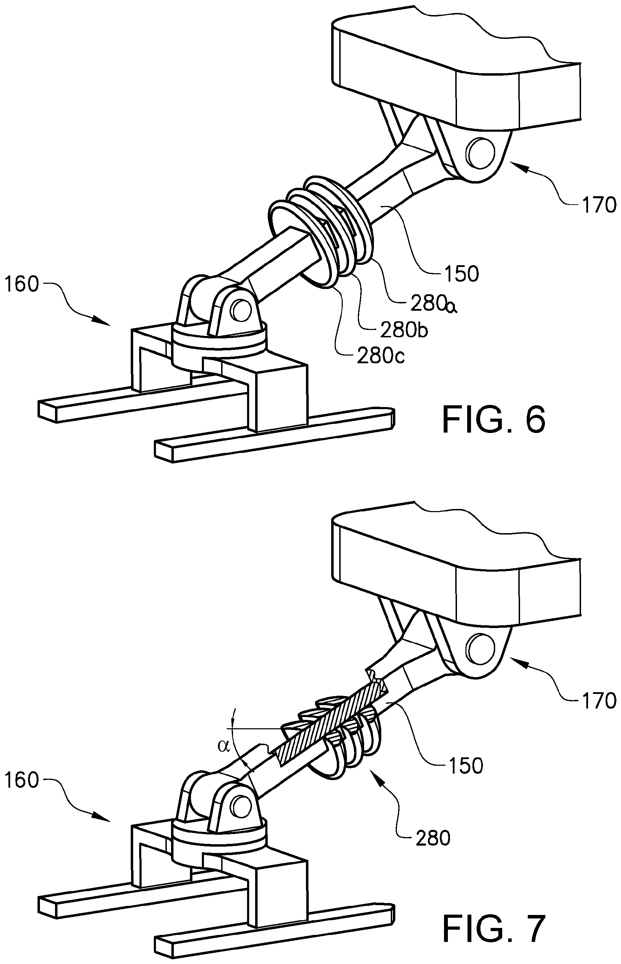

Figure 6 shows another example of a current collector device. The current collector device comprises three vanes 280a, 280b, 280c, shaped as cones, arranged on the elongated current collector arm 150. The three vanes 280a, 280b, 280c are spaced apart. The spacing may be even between all three vanes, or there may be a difference in spacing between any two vanes. The spacing between each of the vanes 280a, 280b, 280c is at least 1 cm. The three vanes 280a, 280b, 280c thus forms grooves in between them due to being spaced apart. This means that there will be a reduced risk that contaminants reach into the grooves between the three vanes 280a, 280b, 280c. Further, the surface area is further increased by utilizing a plurality of vanes. Hence, it is understood that while three vanes 280a, 280b, 280c are shown in figure 6, the current collector may comprise two vanes, or four or more vanes being spaced apart.

Figure 7 shows the example of figure 6 with a cut-out for illustrating the slanting angle α which the vanes 280 (previously denoted 280a, 280b, 280c, here collectively 280) forms against the longitudinal axis of the elongated current collector arm 150. The slanting angle may vary depending on design consideration for the vane(s). For example, the slanting angle α may be between 0 degrees and 90 degrees. A slanting angle of 90 degrees of course results in the vane 180 shown in figure 4, whereas a slanting angle of 0 degrees would indicate that no vane is formed. Hence, the slanting angle α may oftentimes be between 10 degrees and 80 degrees. For example, the slanting angle α may be 15 degrees, 20 degrees 25 degrees, 30 degrees, 35 degrees, 40 degrees, 45 degrees, 50 degrees, 55 degrees, 60 degrees, 65 degrees, 70 degrees, 75 degrees, 80 degrees, or 85 degrees. Further, it is noted that although the cut-out indicates that the elongated current collector arm 150 is solid, the elongated current collector arm 150 may be hollow. Also, the elongated current collector arm 150 is not limited to a particular cross-sectional shape such as square or rectangular indicated by the drawings, the elongated current collector arm 150 may be circular or oval in cross section.

Figure 8 shows an embodiment of a current collector device according to the inventive concept. Figure 9 shows an example of a current collector not part of the invention. The vanes in figures 8 and 9 are shaped as a cone 380 and a disc 480 respectively. The vanes 380, 480 are asymmetrical around the elongated current collector arm 150 such that there is a larger radial distance towards the road than towards the vehicle. Stated differently, the radial extent of the vanes 380, 480 is larger in a downwards direction than upwards. The vanes 380, 480 increase the surface area between the current collector pick-up head 160 and the base 170, and prevent contaminants from the road. Moreover, the vanes 380, 480, being asymmetrical also functions as balancing weights for the current collector device and may thereby increase the stability of the current collector device.

The vane(s) may in principle take any shape and are not limited to the embodiments shown herein, in particular the vane(s) may be rectangular, square, or have any other shape. The vane(s) are also asymmetrical around the elongated current collector arm such that there is a larger radial distance towards the road than towards the vehicle as shown in figures 8 and 9. Such vanes may act as balancing weight for the current collector device.

Further, it is understood that the slanting angle α referred to in the above description may be chosen depending on the design, number of vanes, and the desired aerodynamic drag of the vanes. Furthermore, the vanes may be designed with another shape than the cone shown in the figures, for example a spherically blunted cone, a bi-conic shape, a tangent ogive cone, a spherically blunted tangent ogive, a secant ogive shape, an elliptical cone, a parabolic cone. The specific shape and parameters of such a vane of course depends on the size and the number of vanes to be used.

Moreover, the specific and exemplary material and attachment options described in conjunction to figure 4 is understood to be applicable to all the examples of vane(s) described in figures 4-9. The coating described in conjunction to figure 4 is of course also applicable for all the embodiments of vane(s) described in figures 4-9 and is only left out for the sake of brevity.

It is understood that the present invention is not limited to the embodiments described above and illustrated in the drawings; rather, the skilled person will recognize that many changes, variants and modifications may be made within the scope of the appended claims.

## Claims

1. A current collector device (120) for mounting on a vehicle (100) to transmit electric power between a current conductor (130) located in the surface of a road (110) and the vehicle (100), wherein the current collector device (120) comprises:
- a base (170) for connecting the current collector device to the vehicle;
- an elongated current collector arm (150) that is in operable connection with the base;
- a current collector pick-up head (160) attached to the elongated current collector arm distally from the base; and
wherein the current collector device (120) further comprises at least one vane (180, 280, 380 ,480) arranged on the elongated current collector arm (150), the at least one vane (180, 280, 380 ,480) being configured to increase the surface area of the elongated current collector arm (150), **characterized in that** the at least one vane (280, 280a-c, 380) is slanted towards the current collector pick-up head (160), and
wherein the at least one vane is asymmetrical around the elongated current collector arm such that a radial extent of the at least one vane is larger in a downwards direction than in an upwards direction.

2. Current collector device (120) according to claim 1, comprising at least two vanes (280, 280a-c).

3. Current collector device (120) according to claim 1, comprising at least three vanes (280, 280a-c).

4. Current collector device (120) according to claim 1, comprising at least five vanes (280, 280a-c).

5. Current collector device (120) according any one of claims 2-4, wherein the vanes (280, 280a-c) are separated by at least 1 cm.

6. Current collector device (120) according to any one of the preceding claims, wherein the slanting angle (a) of the vane or vanes from a longitudinal axis of the elongated current collector arm (150) is between 10 degrees and 30 degrees.

7. Current collector device (120) according to any one of the preceding claims, wherein the slanting angle (a) of the vane or vanes from a longitudinal axis of the elongated current collector arm is between 30 degrees and 60 degrees.

8. Current collector device (120) according to any one of the preceding claims, wherein the slanting angle (a) of the vane or vanes from a longitudinal axis of the elongated current collector arm is between 60 degrees and 80 degrees.

9. Current collector device (120) according to any one of the preceding claims, wherein the elongated current collector arm is arranged to be controllable for vertical and transverse displacement relative to the longitudinal axis of the vehicle, and the current collector device further comprises at least one actuator arranged to effect a vertical or transverse displacement of the current collector pick-up head.

10. Current collector device (120) according to any one of the preceding claims, wherein the vane(s) are aerodynamically shaped.

11. A vehicle (100) comprising a current collector device according to any one of the preceding claims.

## Patentansprüche

1. Stromabnehmer (120) zur Montage an einem Fahrzeug (100), um elektrische Energie zwischen einem Stromleiter (130), der sich in der Oberfläche einer Straße (110) befindet, und dem Fahrzeug (100) zu übertragen, wobei der Stromabnehmer (120) umfasst:
- eine Basis (170) zur Verbindung des Stromabnehmers mit dem Fahrzeug;
- einen langgestreckten Stromabnehmerarm (150), der mit der Basis in Wirkverbindung steht;
- einen Stromabnehmerkopf (160), der an dem verlängerten Stromabnehmerarm distal von der Basis angebracht ist; und
wobei der Stromabnehmer (120) ferner mindestens eine Schaufel (180, 280, 380, 480) umfasst, die auf dem länglichen Stromabnehmerarm (150) angeordnet ist, wobei die mindestens eine Schaufel (180, 280, 380, 480) konfiguriert ist, um den Oberflächenbereich des länglichen Stromabnehmerarms (150) zu vergrößern, **dadurch gekennzeichnet, dass**
die mindestens eine Schaufel (280, 280a-c, 380) zum Stromabnehmerkopf (160) hin geneigt ist, und
wobei die mindestens eine Schaufel asymmetrisch um den langgestreckten Stromabnehmerarm herum angeordnet ist, derart dass eine radiale Ausdehnung der mindestens einen Schaufel in einer Abwärtsrichtung größer ist als in einer Aufwärtsrichtung.

2. Stromabnehmer (120) nach Anspruch 1, der mindestens zwei Schaufeln (280, 280a-c) umfasst.

3. Stromabnehmer (120) nach Anspruch 1, der mindestens drei Schaufeln (280, 280a-c) umfasst.

4. Stromabnehmer (120) nach Anspruch 1, mindestens fünf Schaufeln (280, 280a-c) umfasst.

5. Stromabnehmer (120) nach einem der Ansprüche 2-4, wobei die Schaufeln (280, 280a-c) einen Abstand von mindestens 1 cm aufweisen.

6. Stromabnehmer (120) nach einem der vorhergehenden Ansprüche, wobei der Neigungswinkel (a) der Schaufel oder der Schaufeln von einer Längsachse des langgestreckten Stromabnehmerarms (150) zwischen 10 Grad und 30 Grad beträgt.

7. Stromabnehmer (120) nach einem der vorhergehenden Ansprüche, wobei der Neigungswinkel (a) der Schaufel oder der Schaufeln von einer Längsachse des langgestreckten Stromabnehmerarms zwischen 30 Grad und 60 Grad beträgt.

8. Stromabnehmer (120) nach einem der vorhergehenden Ansprüche, wobei der Neigungswinkel (a) der Schaufel oder der Schaufeln von einer Längsachse des langgestreckten Stromabnehmerarms zwischen 60 Grad und 80 Grad beträgt.

9. Stromabnehmer (120) nach einem der vorhergehenden Ansprüche, wobei der langgestreckte Stromabnehmerarm für eine vertikale und transversale Verschiebung relativ zur Längsachse des Fahrzeugs steuerbar angeordnet ist, und der Stromabnehmer ferner mindestens einen Aktuator umfasst, der für eine vertikale oder transversale Verschiebung des Stromabnehmerkopfes angeordnet ist.

10. Stromabnehmer (120) nach einem der vorhergehenden Ansprüche, wobei die Schaufel(n) aerodynamisch geformt sind.

11. Fahrzeug (100) umfassend einen Stromabnehmer nach einem der vorhergehenden Ansprüche.

## Revendications

1. Collecteur de courant pour véhicule (120) destiné à être monté sur un véhicule (100) pour transmettre du courant électrique entre un conducteur de courant (130) situé dans la surface d'une route (110) et le véhicule (100), le collecteur de courant (120) comprenant :
- une base (170) pour connecter le collecteur de courant au véhicule ;
- un bras collecteur de courant allongé (150) qui est en connexion fonctionnelle avec la base ;
- une tête de captation de collecteur de courant (160) fixée au bras collecteur de courant distalement par rapport à la base ; et
le collecteur de courant (120) comprenant en outre au moins une aube (180,280,380,480) disposée sur le bras collecteur de courant allongé (150), l'au moins une aube (180,280,380,480) étant conçue pour augmenter la superficie du bras collecteur de courant allongé (150), **caractérisé en ce que**
l'au moins une aube (280, 280a-c, 380) est inclinée vers la tête de captation de collecteur de courant (160), et
l'au moins une aube est asymétrique autour du collecteur de courant allongé, de sorte qu'une extension radiale de l'au moins une aube est plus importante dans un sens descendant que dans un sens montant.

2. Collecteur de courant (120) selon la revendication 1, comprenant au moins deux aubes (280, 280a-c).

3. Collecteur de courant (120) selon la revendication 1, comprenant au moins trois aubes (280, 280a-c).

4. Collecteur de courant (120) selon la revendication 1, comprenant au moins cinq aubes (280, 280a-c).

5. Collecteur de courant (120) selon l'une quelconque des revendications 2 à 4, dans lequel les aubes (280, 280a-c) sont séparées d'au moins 1 cm.

6. Collecteur de courant (120) selon l'une quelconque des revendications précédentes, dans lequel l'angle d'inclinaison (a) de l'aube ou des aubes par rapport à un axe longitudinal du bras collecteur de courant allongé (150) est compris entre 10 degrés et 30 degrés.

7. Collecteur de courant (120) selon l'une quelconque des revendications précédentes, dans lequel l'angle d'inclinaison (a) de l'aube ou des aubes par rapport à un axe longitudinal du bras collecteur de courant allongé est compris entre 30 degrés et 60 degrés.

8. Collecteur de courant (120) selon l'une quelconque des revendications précédentes, dans lequel l'angle d'inclinaison (a) de l'aube ou des aubes par rapport à un axe longitudinal du bras collecteur de courant allongé est compris entre 60 degrés et 80 degrés.

9. Collecteur de courant (120) selon l'une quelconque des revendications précédentes, dans lequel le bras collecteur de courant allongé est conçu pour être commandé pour pouvoir à exécuter un déplacement vertical et transversal par rapport à l'axe longitudinal du véhicule, et le collecteur de courant comprend en outre au moins un actionneur conçu pour effectuer un déplacement vertical ou transversal de la tête de captation de collecteur de courant.

10. Collecteur de courant (120) selon l'une quelconque des revendications précédentes, dans lequel l'aube ou les aubes ont une forme aérodynamique.

11. Véhicule (100) comprenant un collecteur de courant selon l'une quelconque des revendications précédentes.
